# EUROPÄISCHE PATENTANMELDUNG

(11) **EP 4 523 959 A1**
(43) Veröffentlichungstag der Anmeldung: **19.03.2025**
(21) Anmeldenummer: 24197701.6
(22) Anmeldetag: 30.08.2024
(51) Int. Cl.: B60N 2/02, B60N 2/39, B60N 2/90

(54) **AUTOMATISCHE SITZNEIGUNGSVERSTELLUNG (SNV) FÜR FAHRZEUGSITZE**

(30) Priorität: 13.09.2023 DE 102023124756; 13.09.2023 DE 102023124757
(71) Anmelder: GRAMMER AG, 92289 Ursensollen (DE)
(72) Erfinder: Demleitner, Berthold, 92272 Freudenberg (DE); Haller, Thomas, 92289 Ursensollen (DE)
(74) Vertreter: Hannke, Christian

(57) **Zusammenfassung**

Fahrzeugsitz (1) für den automatischen Neigungsausgleich mit einem Sitzteil (2) und einer Rückenlehne (3), wobei zwischen mindestens einem Sitzplattenteil (8) des Sitzteils (2) und einem darüber angeordneten Sitzpolsterteil (2a) des Sitzteils (2) eine Fluidkammereinheit (16a, 16b; 19a-19d; 20a-20d) mit mindestens zwei flexibel ausgebildeten Fluidkammern (16a, 16b) angeordnet ist

## Beschreibung

Die Erfindung betrifft einen Fahrzeugsitz für den automatischen Neigungsausgleich mit einem Sitzteil und einem Rückenlehnenteil gemäß dem Oberbegriff des Patentanspruches 1.

Häufig ergibt sich bei Nutzfahrzeugen, wie bei Traktoren, das Problem, dass diese zeitweise in einer seitlichen Schrägstellung bzw. Neigungsstellung betrieben werden, um beispielsweise einen Pflug auf dem Acker hinter sich herzuziehen. Bei einem Umpflügen des Ackers ergibt sich nämlich das Problem, dass sich die eine Hälfte der Räder des Traktors im Bereich des bereits gepflügten Ackers befindet, während sich die andere Hälfte der Räder auf dem noch ungepflückten Ackerboden fortbewegt. Hierdurch ergibt sich eine seitliche Neigungsstellung bzw. Schrägstellung des Traktors und damit auch des Fahrzeugsitzes.

Wird eine derartige Schrägstellung bzw. Neigungsstellung des Fahrzeugsitzes über längere Zeit dem Rücken bzw. der Wirbelsäule eines Fahrzeugbenutzers zugemutet, so ergibt sich hieraus die Gefahr von Wirbelsäulenschäden in dem Arbeitsumfeld von Traktoren und aber auch von Baumaschinen. Bei Baumaschinen ergibt sich ebenso sehr häufig das Problem, dass diese bei Straßenbauarbeiten in Schrägstellung betrieben werden müssen. Dies hat ebenso zur Folge, dass der Sitzbenutzer in schräger Position auf dem Fahrzeugsitz sitzt und versucht, diese Schrägposition mithilfe seiner Wirbelsäule auszugleichen.

Somit ergibt sich eine Fehlstellung der Wirbelsäule von oben nach unten zu der Beckenstellung. Dies führt unter Umständen sogar dazu, dass es zu Wirbelsäulenverkrümmungen, sogenannten Skoliosen kommt. Denn der Mensch neigt dazu, dass es seinen Kopf und damit auch die Augen immer horizontal ausrichten möchte, auch wenn das Becken am Ende der Wirbelsäule schräggestellt ist.

Eine Skoliose wird als leicht eingestuft, wenn der Krümmungswinkel der Wirbelsäule über 10°, aber nicht höher als maximal 40° beträgt. Sehr häufig liegen derartige Werte bei rund 20°. Zwar ist eine derartige Skoliose durch konsequente Rückengymnastik behandelbar, jedoch müssen derartige Übungen konsequent und regelmäßig durchgeführt werden, welches häufig aufgrund des täglichen Arbeitsumfeldes auf dem Acker oder auf der Baustelle nicht möglich ist.

Somit ist es Aufgabe der Erfindung, einen Fahrzeugsitz für den automatischen Neigungsausgleich mit einem Sitzteil zur Verfügung zu stellen, der auf einfache Weise für den Sitzbenutzer eine Ausgleichsstellung bei Schrägstellung oder Neigungsstellung des Fahrzeugsitzes zur Verfügung stellen kann.

Diese Aufgabe wird gemäß den Merkmalen des Patentanspruches 1 gelöst.

Kerngedanke der Erfindung ist es, dass bei einem Fahrzeugsitz für den automatischen Neigungsausgleich mit einem Sitzteil und einer Rückenlehne sogenannte Fluidkammern im Bereich des Sitzteiles verwendet werden, wobei Sitzteil und Rückenlehne unabhängig voneinander zu betrachten sind. Dies bedeutet, dass lediglich das Sitzteil und nicht der Rückenlehnenteil für eine Ausgleichsbewegung verändert wird.

Hierfür ist zwischen mindestens einem Sitzplattenteil des Sitzteils und einem darüber angeordneten Sitzpolsterteil des Sitzteils eine Fluidkammereinheit mit mindestens zwei flexibel ausgebildeten Fluidkammern angeordnet, wobei, bezogen auf eine sich in Sitzrichtung erstreckende Mittelachse, eine erste Hälfte der Fluidkammer linksseitig und eine zweite Hälfte der Fluidkammer rechtsseitig der Mittelachse angeordnet sind und die erste und die zweite Hälfte der Fluidkammern abhängig von einer festgestellten seitlichen Neigungsstellung des Sitzteils mittels einer Steuereinrichtung derart befüllbar oder entleerbar ist, dass ein Sitzbenutzer automatisch im Gesäßbereich eine Ausgleichstellung zu der Neigungsstellung unabhängig von einer Rückenlehnenstellung erfährt.

Es geht demzufolge um eine seitliche Neigung der Sitzteils bei einer Betrachtung in Fahrtrichtung. Es soll hierbei nicht der gesamte Fahrzeugsitz neu ausgerichtet werden, sondern lediglich das Sitzteil in seiner Neigungsstellung verändert werden, um eine derartige Ausgleichsstellung zu erhalten. Maßgeblich hierfür ist die Messung eines Neigungssensors bzw. seiner Messdaten, die dazu dienen, eine Steuereinrichtung mithilfe dieser Messdaten derart zu regeln, dass diese kontrolliert über Zu- und Ablaufleitungen die linksseitige Fluidkammer und die rechtsseitige Fluidkammer gezielt derart befüllt bzw. entleert, dass eine entgegengesetzte Ausgleichsneigung des Sitzteils im Verhältnis zu der Neigungsstellung, die sich aus dem schräggestellten Fahrzeug und/oder dem schräggestellten Fahrzeugsitz ergibt, sich einstellt.

Wenn beispielsweise das Fahrzeug in Fahrtrichtung betrachtet, links in der Furche des bereits beackerten Teiles eines Ackers fährt, so wird sich der Traktor nach links neigen. Dies hat zur Folge, dass sich ebenso der Fahrzeugsitz nach links neigt. Demzufolge wird aufgrund der gesendeten Messsignale des Neigungssensors die Steuereinrichtung dafür sorgen, dass vermehrt Fluidmengen in die linke Fluidkammer gepumpt wird, wohingegen aus der rechten Fluidkammer, sofern noch Fluidmengen darin vorhanden sind, Fluid herausgenommen wird. Dies hat zur Folge, dass sich das Sitzteil entgegengesetzt zu der Neigungsstellung des Fahrzeuges bzw. des Fahrzeugsitzes neigt und somit eine gewisse Ausgleichstellung schafft. Somit kann der Fahrzeugfahrer bzw. der Sitzbenutzer die Gefahr von Wirbelsäulenverkrümmungen in Form einer Skoliose vermeiden.

Das Sitzteil wird in seiner Neigungsstellung aufgrund der Fluidkammerfunktionen unabhängig von einer Position der Rückenlehne betrieben.

Um derartige Zu- und Abgänge von Fluiden zu den einzelnen Fluidkammern zu steuern, weist nicht nur die Steuereinrichtung eine CPU auf, sondern es sind zusätzliche Ventile bzw. Ventileinrichtungen angeordnet, die mittels der Steuereinrichtung angesteuert werden und einen geregelten Zu- und Ablauf des Fluids ermöglichen.

Eine am Fahrzeugsitz angebrachte Neigungssensoreinheit dient dazu, den Grad der momentanen seitlichen Neigung des Fahrzeugsitzes und/oder des Fahrzeuges zu messen, und anschließend ein daraus ermitteltes Neigungsmesssignal als Datenübertragung an die Steuereinrichtung zu senden.

Die Fluidkammern können vorteilhafterweise Luftkammern sein, wobei diese bevorzugt ein Mantelmaterial aufweisen, welches flexibel ausgebildet ist. Somit kann auf einfache Weise die Fluidkammer schnell aufgepumpt oder wieder entleert werden.

Bevorzugt ist links- und rechtsseitig der Mittelachse jeweils eine Luftkammer angeordnet oder aber auch eine Mehrzahl an einzelnen Luftkammern, die entweder untereinander verbunden sind oder getrennt voneinander angesteuert werden können. Wichtig ist jedoch, dass in beiden Hälften, also links und rechts von der Mittelachse, eine spiegelsymmetrische Anordnung der Luftkammern bzw. Fluidkammern vorhanden ist, sodass zu beiden Seiten hin ein entsprechender Neigungsausgleich erfolgen kann, unabhängig davon, zu welcher Seite sich das Fahrzeug neigt.

Gemäß einer bevorzugten Ausführungsform ist zwischen den Fluidkammern und dem darüber angeordneten Sitzpolsterteil mindestens ein erstes Plattenelement linksseitig und mindestens ein zweites Plattenelement rechtsseitig angeordnet, um eine stabilere Auflagesitzfläche für den Sitzbenutzer zu erhalten, da keine stabile Sitzposition bei direktem Kontakt mit einer aufgeblasenen Luftkammer entstehen kann. Vielmehr wird durch das relativ steife Plattenelement erreicht, dass ein stabiler Untergrund unterhalb des Sitzpolsterteiles entsteht, selbst dann, wenn im Extremfall eine links- oder rechtsseitige Luftkammer zu 100 % gefüllt ist, wohingegen die auf der anderen Seite vorhandene Luftkammer komplett entleert ist.

Die Plattenelemente weisen gemäß einer bevorzugten Ausführungsform Erhebungen und Vertiefungen für eine Erhöhung des Sitzkomforts auf. Dies hat zur Folge, dass keine starre Platte unter dem Sitzpolsterteil zu spüren ist, welche komplett flach ausgebildet ist. Vielmehr können Vertiefungen für die Beckenknochenbereiche und für die Aufnahme von anderen Gesäßformen zur Erhöhung des Sitzkomforts beitragen.

Gemäß einer bevorzugten Ausführungsform sind das erste und das zweite Plattenelement mittels einer entlang der Mittelachse des Sitzteils verlaufenden erten Schwenkachse auf- und abwärts schwenkbar gelagert. Somit sind die Plattenelemente in der Mitte verschwenkbar aufgehängt, sodass die größten Strecken bei dem Auf- und Abwärtsschwenken der Plattenelemente in ihrem äußeren Bereich, also an den äußersten Seitenbereichen des Fahrzeugsitzes stattfinden. Hierdurch kann bestmöglich ein Ausgleich der ungewollten Neigungsstellung des Fahrzeugsitzes erfolgen.

Die beiden Plattenelemente, also das erste und das zweite Plattenelement, können unabhängig voneinander verschwenkbar angeordnet sein. Hierdurch wird ermöglicht, dass beispielsweise ein linksseitiges Plattenelement nach oben geschwenkt werden kann, während ein rechtsseitiges Plattenelement unabhängig von dem Ausmaß der Schwenkbewegung des linksseitigen Plattenelementes mehr oder weniger nach unten geschwenkt werden kann. Damit sind sehr individuelle Einstellungen der Neigung des Sitzpolsterteiles möglich, um hierdurch individuell auf bestimmte Neigungspositionen des gesamten Fahrzeuges, welches sich in seiner Neigungsstellung ständig bei Durchfahren eines Ackers ändert, einzugehen.

Bevorzugt weisen das erste und zweite Plattenelement jeweils eine bezüglich der Mittelachse linksseitige und rechtsseitige Flächenerstreckung auf, die nicht kleiner als die Flächenerstreckung der darunter angeordneten links- oder rechtsseitig angeordneten Fluidkammer ist. Somit besteht nicht die Gefahr, dass die Fluidkammer durch das Polsterteil hindurch eine Druckwirkung auf den Sitzbenutzer ausübt. Vielmehr wird der Druck einer sich aufgeblasenen Fluidkammer bzw. Luftkammer auf das Plattenelement verteilt und dieses gibt den Druck bzw. die Kraft nach oben flächenverteilt auf den Sitzbenutzer weiter.

Eine weitere vorteilhafte Ausführungsform sieht vor, dass zwischen den nebeneinander angeordneten Fluidkammern und dem darüber angeordneten Sitzpolsterteil ein für sämtliche Fluidkammern gemeinsames drittes Plattenelement angeordnet ist, das mittels einer entlang der Mittelachse des Sitzteils verlaufenden zweiten Schwenkachse wippenartig schwenkbar gelagert ist.

Somit sind nicht zwei getrennt voneinander schwenkbare Plattenelemente vorhanden, sondern vielmehr ein gemeinsames Plattenelement. Dies hat den Vorteil, dass bei einer Nach-Oben-Bewegung auf der einen Seite im gleichen Ausmaß eine Nach-Unten-Bewegung auf der anderen Seite stattfindet. Diese Wippbewegung wird von vielen Sitzbenutzern als angenehm empfunden, da keine ungewollten Stauchungen oder Überstreckungen des Beckens aufgrund unterschiedlich geneigter Plattenelemente auf der linken und auf der rechten Seite entstehen können.

Die Steuereinrichtung ist gemäß einer bevorzugten Ausführungsform bei vorbestimmten Geschwindigkeiten und/oder Beschleunigungen des Fahrzeugführers aktivierbar. Beispielsweise kann vorgesehen sein, dass lediglich im Pflugzustand eine derartige Neigungsveränderung des Sitzteiles erwünscht ist. Wenn sich der Traktor hingegen auf der normalen Teerstraße befindet, soll eine derartige Neigungsverstellung bzw. ein Neigungsausgleich nicht stattfinden.

Mittels eines Beschleunigungssensors bzw. einer Beschleunigungssensoreinrichtung kann festgestellt werden, ob momentan eine Straßenfahrt oder ein Feldeinsatz für den Traktor vorliegt. Abhängig von den Beschleunigungswerten kann also mithilfe von Beschleunigungssignalen, die an die Steuereinrichtung weitergegeben werden, verhindert werden, dass ein Neigungsausgleich stattfindet, sofern sich der Traktor momentan auf der Straße befindet. Dies trifft im Übrigen auch auf Baumaschinenfahrzeuge zu, sofern die Straße geteert ist.

Signale von OPS können ebenso ausgewertet werden, um Sitzdruckverteilungen über die Seitenneigung wieder auszugleichen.

Selbstverständlich kann auch ein nicht offenes System angewendet werden, welches sich dadurch auszeichnet, dass keine separaten Pumpen für das Zuführen von Fluiden bzw. Luft sowie entsprechende Ventileinrichtungen erforderlich sind. Bei einem geschlossenen System, bei dem die einzelnen Luft- bzw. Fluidkammern untereinander verbunden sind, jedoch keinen Ausgang oder Eingang nach außen hin zu einer Ventileinrichtung oder einer Pumpe aufweisen, findet eine Neigungskompensation allein durch eine Veränderung des Körpergewichts von einer Seite auf die andere Seite statt. Diese Körpergewichtsveränderung ergibt sich automatisch bei einem geneigten Fahrzeug und einem geneigten Fahrzeugsitz, da der Sitzbenutzer dazu neigt, sich zu der höher gelegenen Sitzhälfte des Sitzteils hinzuneigen und damit ein größeres Gewicht auf diese Sitzteilhälfte verlagert. Hierdurch wird die Luft in dieser Sitzteilhälfte bzw. in der darunterliegenden Luftkammer herausgedrückt und wird automatisch in die Luftkammer der anderen niedriger liegenden Sitzteilhälfte gedrückt. Somit findet auch auf diese Weise Neigungsausgleich statt.

Weitere Ausführungsformen ergeben sich aus der Zeichnung. Hierbei zeigen:
Fig. 1 in einer schematischen perspektivischen Ansicht ein Fahrzeugsitze gemäß der vorliegenden Erfindung;
Fig. 2 in einer Draufsicht ein Sitzteil für einen Fahrzeugsitz gemäß einer Ausführungsform der Erfindung;
Fig. 3 in einer Querschnittsdarstellung gemäß Pfeil B-.-.-B in Fig. 2 das Sitzteil des erfindungsgemäßen Fahrzeugsitzes;
Fig. 4a bis 4c in perspektivischen Seitendarstellungen Teile des erfindungsgemäßen Sitzteils in verschiedenen Aufbauphasen;
Fig. 5a bis 5c in einer Vorderansicht ein Sitzteil mit dem erfindungsgemäßen Aufbau gemäß einer Ausführungsform der Erfindung in verschiedenen Neigungspositionen;
Fig. 6a und 6b in einer perspektivischen schematischen Darstellung ein Ausschnitt des Sitzteils gemäß einer bevorzugten Ausführungsform der Erfindung mit verschiedenen Neigungspositionen

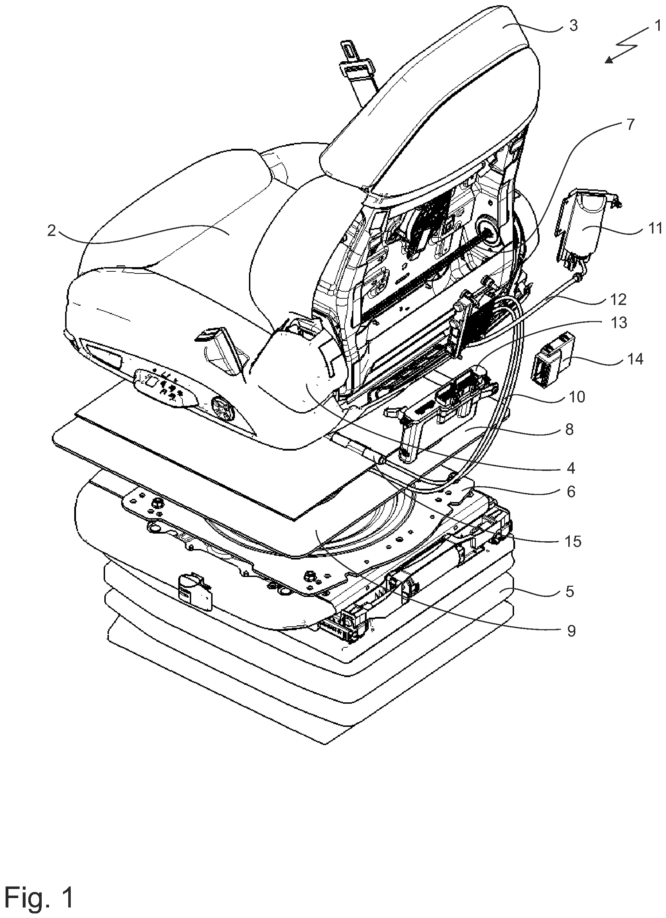

In Fig. 1 wird in einer perspektivischen Rückansicht ein erfindungsgemäßer Fahrzeugsitz dargestellt. Dieser Fahrzeugsitz 1 weist ein Sitzteil 2 und eine Rückenlehne 3 auf.

Mittels einer Schwenkachse 7 können nicht nur hier angedeutete Armlehnen 4 verschwenkt werden, sondern auch die Rückenlehne 3 verschwenkt werden, wobei zu beachten ist, dass das Sitzteil 2 unabhängig von der Rückenlehne verschwenkbar ist.

Ein Faltenbalg 5 im unteren Bereich deckt ein hier nicht näher dargestelltes Scherengestell ab.

Ein hier nur beispielhaft dargestellter Drehteller 6 dient dazu, den Fahrzeugsitz im oberen Bereich gegenüber dem unteren Bereich zu verschwenken.

Ein unteres Plattenelement 8 ist unterhalb von hier nicht näher dargestellten Fluidkammern angeordnet und dient dazu die Fluidkammern nach unten abzustützen und zu betten.

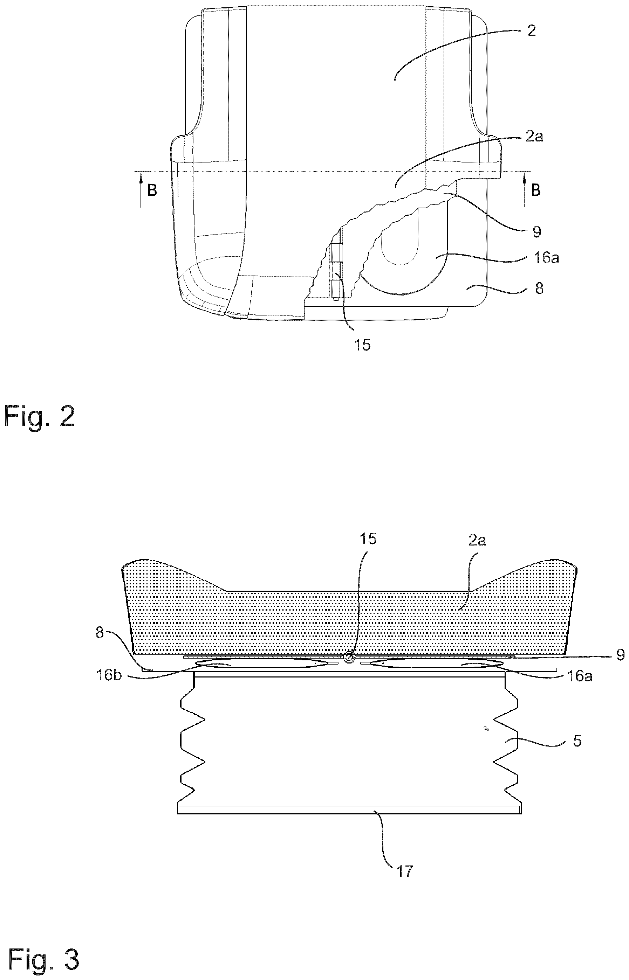

Ein oberes Plattenelement 9 ist oberhalb der hier nicht näher dargestellten Fluidkammern angeordnet und dient dazu, die Fluidkammern nach oben hin gegenüber dem Sitzpolsterteil 2a, wie in Fig. 2 dargestellt, abzugrenzen.

Luftzu- und Abführleitungen 10 verlaufen von einer hier nicht näher dargestellten Ventileinrichtung zu den links- und rechtsseitig angeordneten Luftkammern zwischen den Plattenelementen 9 und 8. Eine luftfördernde Pumpe 11 ist über eine Luftleitung 12 mit der Ventileinrichtung verbunden, sodass eine Luftversorgung sichergestellt ist. Eine Steuereinrichtung 13 für die Steuerung der Neigungsverstellung des Sitzteiles wird ebenso wie ein Neigungssensor bzw. eine Neigungssensoreinrichtung 14 in ihrer Funktion noch näher beschrieben.

Eine Achse 15 dient dazu, ein linkseitiges Plattenelement 9 und ein rechtsseitiges Plattenelement 9 schwenkbar zueinander anzuordnen.

In Fig. 2 wird in einer Draufsicht das Sitzteil in seinem Aufbau gemäß einer Ausführungsform der Erfindung beschrieben.

Das Sitzteil 2 weist das Sitzpolsterteil 2a auf. Darunter ist das bereits beschriebene Plattenelement 9 angeordnet, welches wiederum eine linksseitige Fluidkammer bzw. Luftkammer 16a von dem Polsterteil 2a trennt.

Das Plattenelement 9 ist schwenkbar an der Schwenkachse 15 angeordnet, wobei die Schwenkachse 15 entlang einer Mittelachse 15a des Sitzteiles 2 ausgerichtet ist. In der hier dargestellten Version ist die Vorderseite des Sitzteiles unten zu sehen, wohingegen die Rückseite im oberen Bereich der Bildebene zu sehen ist.

Das in Fig. 2 dargestellte Sitzeil wird in einer Querschnittsdarstellung entlang der Pfeile B-.-.-B wiedergegebenen. Dies ist in Fig. 3 zu sehen.

Der Fig. 3 ist zu entnehmen, dass ein oberes Plattenelement 9 an einer Schwenkachse 15 schwenkbar aufgehängt ist. Das Plattenelement 9 kann sowohl einstückig über die gesamte Breite des Sitzteiles hinweg ausgebildet sein und an der Schwenkachse 15 wippenartig verschwenkt werden. Es kann aber auch in 2-teiliger Form vorliegen. Im Fall einer 2-teiligen Form des Plattenelementes 9 ist ein rechtsseitiges Plattenelement 9 schwenkbar an der Schwenkachse 15 angeordnet. Ein linksseitiges Plattenelement 9 ist ebenso an der Schwenkachse 15 angeordnet. Diese beiden Plattenelemente können entweder in Abhängigkeit voneinander oder unabhängig voneinander nach oben oder nach unten verschwenkt werden.

Unter dem Plattenelement 9 bzw. den Plattenelementen sind eine linksseitige Luftkammer 16a und eine rechtsseitige Luftkammer 16b angeordnet.

Der Faltenbalg 5 ist gegenüber einem Bodenelement 17 nach unten hin abgestützt.

Die beiden Luftkammern 16a und 16b werden nach unten hin von einem weiteren Plattenelement 8 abgestützt, so dass zwischen beiden Plattenelementen 9 und 8 beide Luftkammern angeordnet sind.

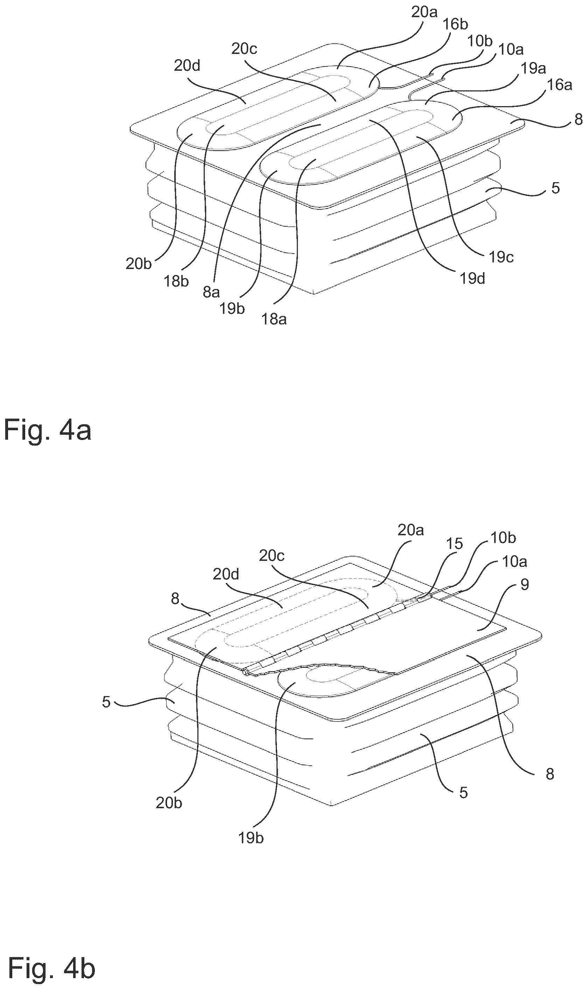

In den Figuren 4a bis 4c wird in einer perspektivischen Ansicht das Sitzteil in verschiedenen Aufbauabschnitten dargestellt. Diesen Darstellungen ist zu entnehmen, dass sich an das Sitzteil unterseitig der umlaufende Faltenbalg 5 anschließt. Das untere Plattenelement 8 ist angeordnet, um die Luftkammern 16a und 16b nebeneinander darauf anzuordnen. Beide weisen Zu- und Abluftleitungen 10a und 10b auf, die, hier nicht näher dargestellt, zu einer Ventileinrichtung geführt sind.

Die beiden Luftkammern 16a und 16b sind bevorzugt ovalförmig ausgebildet und weisen in der Mitte einer Ausnehmung 18a und 18b auf. Diese Form von Luftkammern erhöht die Stabilität des Sitzteils und der gesamten Sitzfläche bei einem Aufpumpen der Luftkammern.

Die Luftkammern 16a und 16b weisen unterschiedliche Abschnitte auf. Die rückseitigen Abschnitte 19a und 20a sind halbbogenförmig ausgebildet. Die Vorderseitenenden 19b und 20b sind ebenso bogenförmig ausgebildet. Längere Strecken, die diese bogenseitigen Enden miteinander verbinden, weisen Bezugszeichen 19c, 19d, 20c und 20d auf. Sämtliche Abschnitte 19a-d und 20a-d können bestimmungsmäßig fluidisch miteinander verbunden sein.

Zwischen den Luftkammern ist ein Abschnitt 8a des unteren Plattenelementes vorhanden, welches dazu dienen kann, eine darüber angeordnete Schwenkachse gemäß Fig. 4b mit dem Bezugszeichen 15 anzuordnen, ohne dass die darunterliegenden Luftkammern verletzt werden.

In Fig. 4b ist das Plattenelement 9 oberhalb der Luftkammern zu sehen, welches über die Schwenkachse 15 auf und ab bzw. nach links und rechts verschwenkt werden kann. Sofern das obere Plattenelement 9 links- und rechtsseitig als ein einstückiges Bauteil ausgebildet, fungiert die Schwenkachse 15 als mittig angeordnete Schwenkachse für eine Wippbewegung des Plattenelementes 9.

Jedoch kann alternativ das Plattenelement 9 zweiteilig derart ausgebildet sein, dass es ein linksseitige Plattenelement 9 und ein rechtsseitiges Plattenelement 9 gibt, welche sich beide an der Schwenkachse 15 treffen und unabhängig voneinander nach oben oder nach unten geschwenkt werden können. Hierdurch ist weniger eine wippenartige Bewegung des Plattenelementes 9 sondern mehr eine flügelartige Bewegung der beiden Plattenelemente 9 links und rechts der Schwenkachse möglich.

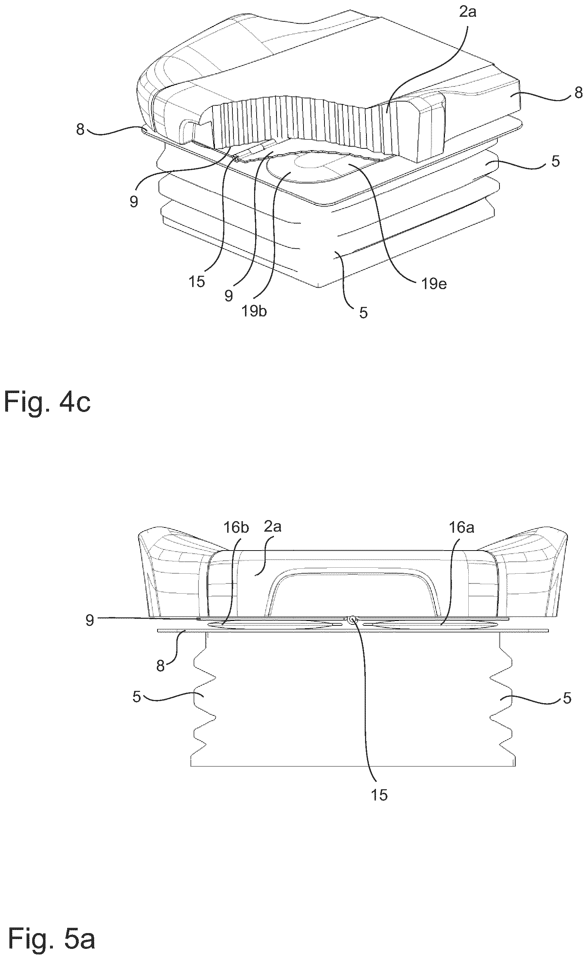

In Fig. 4c ist ergänzend das Sitzpolsterteil 2 dem Plattenelement 9 angeordnet. Ein linkseitiges und rechtsseitiges Auf- und Abwärtsbewegen des Polsterteils 2a ergibt sich aufgrund des Auf- und Abpumpens der darunterliegenden Luft in den Luftkammern 19a-d und 20a-d und de sich dazu mitbewegenden Plattenelementen 9, die zwischen dem Polsterteil 2a und den Luftkammern angeordnet sind.

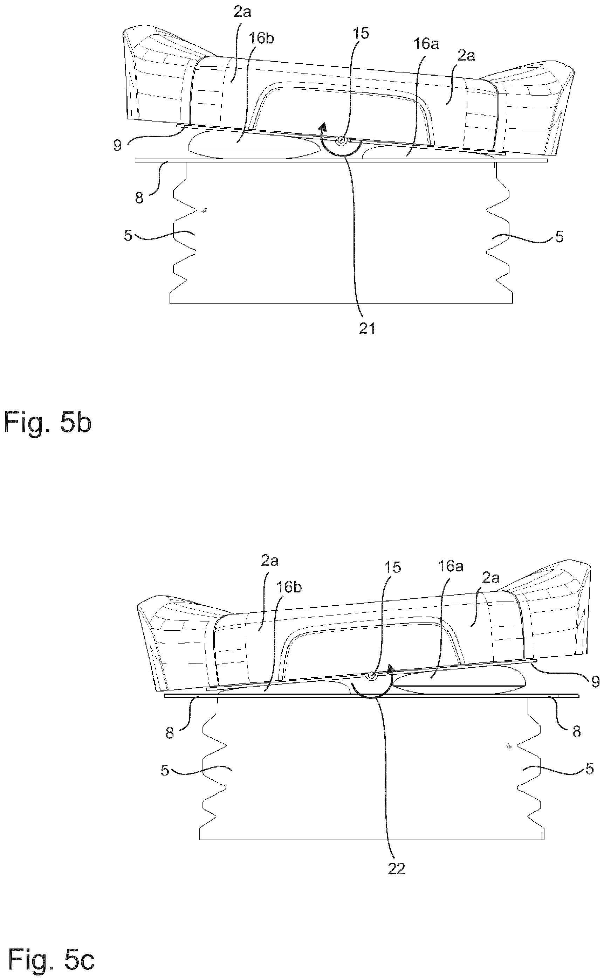

In den Figuren 5a, 5b und 5c wird in einer Vorderansicht das Sitzteil mit verschiedenen Neigungspositionen bzw. Ausgleichbewegungen dargestellt. Diesen Figuren ist deutlich zu entnehmen, dass das Sitzteil 2 in Fig. 5a keine Neigungsstellung eingenommen hat. In Fig. 5b ist hingegen Sitzteil, in Fahrtrichtung betrachtet, nach links geschwenkt, wie es aus dem Pfeil 21 ersichtlich wird. Dies bedeutet, dass das Fahrzeug linksseitig höher fährt als rechtsseitig. Eine derartige Neigungsverstellung wird durch das Aufblasen der Luftkammer 16b auf der rechten Seite des Sitzteiles bewirkt, woraufhin sich das Plattenelement 9 an dieser Stelle anhebt und auf der linken Seite absenkt. Dies hat zur Folge, dass die Luftkammer 16a Luft ablässt. Ein derartiger Vorgang wird durch die hier nicht näher dargestellte Steuereinrichtung gesteuert.

In Fig. 5c ist die genau andersherum geneigte Position des Sitzteiles 2 wiedergegeben. Dies wird durch den Pfeil 22 wiedergegeben. Dies bedeutet, dass in diesem Fall die Luftkammer 16a mittels der Steuereinrichtung aufgeblasen wird, da der Neigungssensor eine Neigung des Fahrzeuges und damit des Fahrzeugsitzes nach links, in Fahrtrichtung betrachtet, festgestellt hat. Dies bedeutet, dass das Fahrzeug linksseitig niedriger fährt und demzufolge das Sitzteil gemäß dem Pfeil 22 linksseitig nach oben gepumpt werden muss und rechtsseitig durch Ablassen von Luft aus der Luftkammer 16b nach unten gefahren werden muss. Das Plattenelement 9 ist in diesem Fall einstückig ausgebildet und führt demzufolge eine wippenartige Bewegung aus.

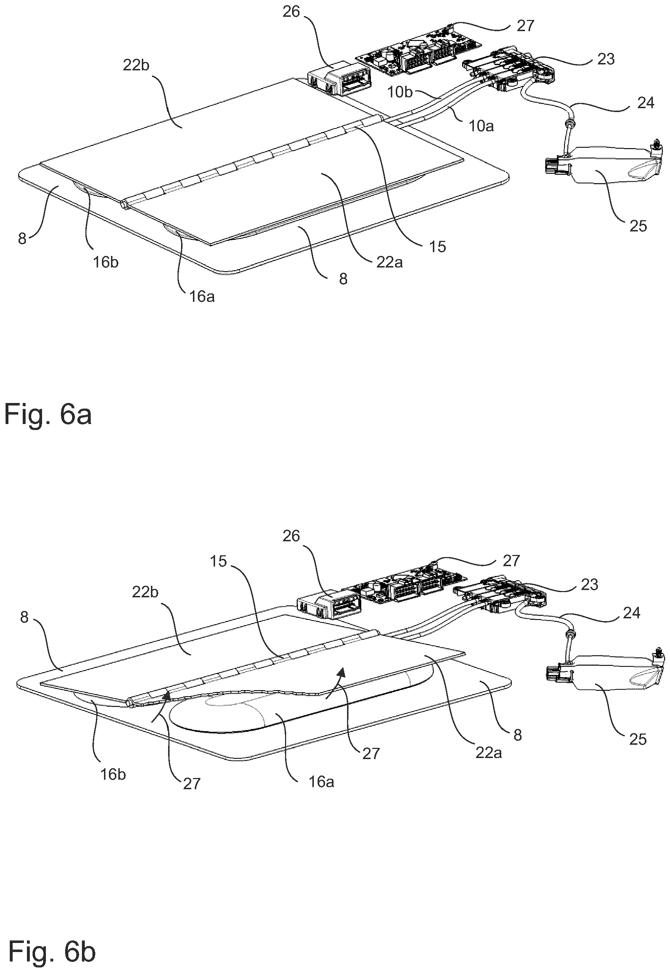

In Fig. 6a und 6b ist in einer schematischen Darstellung das Sitzteil mit der dazugehörigen Steuereinheit gemäß einer Ausführungsform der Erfindung gezeigt. Diese Figuren 6a und 6b unterscheiden sich in ihrer Schwenkposition. Bei der in Fig. 6a wiedergegebenen Schwenkposition der oberen Plattenelemente 22a und 22b soll gezeigt werden, dass beide Plattenelemente einseitig schwenkbar aufgehängt sind und sich unabhängig voneinander nach oben bzw. nach unten bewegen können. Eine nach oben gerichtete Schwenkbewegung 27 des linksseitigen Plattenelementes 22a kann demzufolge größer ausfallen als eine nach unten gerichtete Schwenkbewegung des rechtsseitigen Plattenelementes 22b. Demzufolge kann beispielsweise mehr Luft aus der rechtzeitigen Luftkammer 16b herausgelassen werden, als in die linksseitige Luftkammer 16a hineingepumpt wird. Oder entsprechend andersherum.

Nur schematisch sind die Neigungssensoreinrichtung 26 und die damit verbundene Steuereinrichtung 27 dargestellt.

Die zwei Leitungen 10a und 10b für die Luftzu- und abführströme sind mit einer Ventileinrichtung 23 verbunden, welche wiederum über eine Lufthauptleitung 24 mit einer Pumpe 25 verbunden ist.

### Bezugszeichenliste

- 1: Fahrzeugsitz
- 2: Sitzteil
- 2a: Sitzpolsterteil
- 3: Rückenlehne
- 4: Armlehne
- 5: Faltenbalg
- 6: Drehteller
- 7: Schwenkachse
- 8: Sitzplattenteil
- 9: Plattenelement
- 10a: Leitung
- 10b: Leitung
- 11: luftfördernde Pumpe
- 12: Luftleitung
- 13: Steuereinrichtung
- 14: Neigungssensoreinrichtung
- 15: Schwenkachse
- 15a: Mittelachse
- 16: Fluidkammereinheit
- 16a: Fluidkammereinheit
- 16b: Fluidkammereinheit
- 17: Bodenelement
- 18a: Ausnehmung
- 18b: Ausnehmung
- 19a: Fluidkammereinheit
- 19b: Fluidkammereinheit
- 19c: Fluidkammereinheit
- 19d: Fluidkammereinheit
- 20: Fluidkammereinheit
- 20a: Fluidkammereinheit
- 20b: Fluidkammereinheit
- 20c: Fluidkammereinheit
- 20d: Fluidkammereinheit
- 21: Ausgleichsstellung
- 22: Ausgleichsstellung
- 22a: erstes Plattenelement
- 22b: zweites Plattenelement
- 23: Radelement
- 24: Lufthauptleitung
- 25: Pumpe
- 26: Achse
- 27: nach oben gerichtete Schwenkbewegung

## Patentansprüche

1. Fahrzeugsitz (1) für den automatischen Neigungsausgleich mit einem Sitzteil (2) und einer Rückenlehne (3), wobei zwischen mindestens einem Sitzplattenteil (8) des Sitzteils (2) und einem darüber angeordneten Sitzpolsterteil (2a) des Sitzteils (2) eine Fluidkammereinheit (16a, 16b; 19a-19d, 20a-20d) mit mindestens zwei flexibel ausgebildeten Fluidkammern (16a, 16b) angeordnet ist,
**dadurch gekennzeichnet, dass**
bezogen auf eine sich in Sitzrichtung erstreckende Mittelachse (15a) eine erste Hälfte der Fluidkammern (16a) linksseitig und eine zweite Hälfte der Fluidkammern (16b) rechtsseitig der Mittelachse (15a) angeordnet sind,
wobei die erste und die zweite Hälfte der Fluidkammern (16a, 16b) abhängig von einer festgestellten seitlichen Neigungsstellung des Sitzteils (2) mittels einer Steuereinrichtung (27) derart befüllbar oder entleerbar ist, dass ein Sitzbenutzer automatisch eine Ausgleichsstellung (21,22; 27) zu der Neigungsstellung im Gesäßbereich unabhängig von einer Rückenlehnenstellung erfährt.

2. Fahrzeugsitz nach Anspruch 1,
**dadurch gekennzeichnet, dass**
eine am Fahrzeugsitz (1) angebrachten Neigungssensoreinheit (26), welche den Grad der momentanen seitlichen Neigung des Fahrzeugsitzes (1) und/oder des Fahrzeuges misst und ein Neigungsmesssignal an die Steuereinrichtung (27) sendet.

3. Fahrzeugsitz nach Anspruch 1 oder 2,
**dadurch gekennzeichnet, dass**
die Fluidkammern (16a, 16b) Luftkammern (19a-d, 20a-d) sind.

4. Fahrzeugbesitzer Anspruch 3,
**dadurch gekennzeichnet, dass**
links- und rechtsseitig der Mittelachse (15a) eine Mehrzahl an Luftkammern angeordnet ist.

5. Fahrzeugsitz nach einem der vorangegangenen Ansprüche,
**dadurch gekennzeichnet, dass**
zwischen den Fluidkammern (16a, 16b) und dem darüber angeordneten Sitzpolsterteil (2a) mindestens ein erstes Plattenelement (22a) linksseitig und mindestens ein zweites Plattenelement (22b) rechtsseitig angeordnet ist, um eine stabilere Auflagesitzfläche für den Sitzbenutzer zu erhalten.

6. Fahrzeugsitz nach Anspruch 5,
**dadurch gekennzeichnet, dass**
das erste und zweite Plattenelement (22a, 22b) Erhebungen und Vertiefungen für eine Erhöhung des Sitzkomforts aufweisen.

7. Fahrzeugsitz nach Anspruch 5 oder 6,
**dadurch gekennzeichnet, dass**
das erste und zweite Plattenelement (22a, 22b) mittels einer entlang der Mittelachse (15a) des Sitzteils (2) verlaufenden ersten Schwenkachse (15) auf- und abwärts schwenkbar gelagert sind.

8. Fahrzeugsitz nach Anspruch 7,
**dadurch gekennzeichnet, dass**
das erste und zweite Plattenelement (22a, 22b) jeweils eine bezüglich der Mittelachse (15a) linksseitige und rechtsseitige Flächenerstreckung aufweisen, die nicht kleiner als die Flächenerstreckung der darunter angeordneten links- oder rechtsseitig angeordneten Fluidkammern (19a - d, 20a - d) ist.

9. Fahrzeugsitz nach Anspruch 8,
**dadurch gekennzeichnet, dass**
das erste und zweite Plattenelement (22a, 22b) unabhängig voneinander verschwenkbar sind.

10. Fahrzeugsitz nach einem der Ansprüche 1 - 4,
**dadurch gekennzeichnet, dass**
zwischen den nebeneinander angeordneten Fluidkammern (16a, 16b) und dem darüber angeordneten Sitzpolsterteil (2a) ein für sämtliche Fluidkammern (16a, 16b) gemeinsames drittes Plattenelement (9) angeordnet ist, dass mittels einer entlang der Mittelachse (15a) des Sitzteils (2) verlaufenden zweiten Schwenkachse (15) wippenartig schwenkbar gelagert ist.

11. Fahrzeugsitz nach einem der vorangegangenen Ansprüche,
**dadurch gekennzeichnet, dass**
die Steuereinrichtung (27) bei vorbestimmbaren Geschwindigkeitswerten und/oder Beschleunigungswerten des Fahrzeuges aktivierbar ist.
